# EUROPÄISCHE PATENTANMELDUNG

(11) **EP 1 278 355 A1**
(43) Veröffentlichungstag der Anmeldung: **22.01.2003**
(21) Anmeldenummer: 02100712.5
(22) Anmeldetag: 14.06.2002
(51) Int. Cl.: H04M 1/02

(54) **Mobilfunkgerät mit austauschbarem Display**

(30) Priorität: 17.07.2001 DE 10134844
(71) Anmelder: SIEMENS AKTIENGESELLSCHAFT, 80333 München (DE)
(72) Erfinder: Werner, Marco, 81475, München (DE)

(57) **Zusammenfassung**

Die Erfindung betrifft ein Mobilfunkgerät mit einer Anzeigeeinrichtung, wobei die Anzeigeeinrichtung elektrisch und mechanisch lösbar mit dem Mobilfunkgerät gekoppelt ist.

## Beschreibung

Die Erfindung betrifft ein Mobilfunkgerät gemäß dem Oberbegriff des Patentanspruchs 1.

Für zukünftige Multimediaapplikationen in Mobiltelefonen beziehungsweise in Mobilfunkgeräten sind vergleichsweise teure, hochauflösende Farbdisplays notwendig. Die Herstellungskosten dieser Kommunikationsendgeräte werden maßgeblich durch den Preis dieser Anzeigeeinrichtungen bestimmt und unnötig verteuert, wenn diese Anwendungen nicht oder nur selten benutzt werden. Die Hersteller von Mobilfunkgeräten sind somit erheblichen Risiken und Kostennachteilen ausgesetzt, wenn eine Produktserie ausschließlich mit teueren "High-End-Bildschirmen" ausgerüstet wird. Wenn dieser "High-End-Bildschirm" durch ein sogenanntes OLED-Display (organisches LED-Display) realisiert ist, so ist die Lebensdauer durch den Alterungsprozess dieses Displaytyps stark eingeschränkt.

Applikationen für verschiedene Mobilfunkgeräte ähnelten sich bisher in ihren Anforderungen für die Displays stark, so dass Umfang und Ausstattung nicht stark unterschieden und preislich gut optimiert werden konnten. Durch den Einsatz von WAP (Wireless-Application-Protocol) und die Anzeige von Grafiken sind die Hersteller gezwungen, grundsätzlich Grafikdisplays einzubauen mit entsprechenden Auswirkungen auf den Preis des Displays und den Umfang der Ansteuerung.

Der Erfindung liegt die Aufgabe zugrunde, die Mobiltelefone für den Benutzer insbesondere hinsichtlich des Preises attraktiver zu machen.

Diese Aufgabe wird erfindungsgemäß durch die im unabhängigen Patentanspruch angegebenen Merkmale gelöst.

Im Folgenden wird die Erfindung anhand eines Ausführungsbeispieles näher beschrieben.

Ein Mobilfunkgerät wird erfindungsgemäß mit einem austauschbaren Display beziehungsweise einer austauschbaren Anzeigeeinrichtung ausgerüstet. Die Anzeigeeinrichtung ist beispielsweise als Modul ausgebildet, die in die Vorderseite des Grundgerätes beziehungsweise Mobilfunkgerätes eingeschnappt wird. Die Anzeigeeinrichtung ist einklipp- und abnehmbar, sowie es üblicherweise bei Batteriepacks an der Geräterückseite der Mobilfunkgeräte üblich ist.

Der elektrische Kontakt zwischen den elektronischen Bauteilen des Mobilfunkgerätes und der Anzeigeeinrichtung kann beispielsweise über Steckkontakte oder Leitgummis hergestellt werden. Für die lösbare elektrische Verbindung sind dem Fachmann eine Vielzahl von Lösungsmöglichkeiten bekannt.

Das erfindungsgemäße Mobilfunkgerät bietet beispielsweise bei der Serienausstattung ein kostengünstiges Standarddisplay, und ein hochwertiges "High-End"-Display wird als Zubehör angeboten.

### Dabei ergeben sich folgende Vorteile:

Es muss nicht eine ganze Geräteserie mit teueren Displays ausgerüstet werden.

Das Grundgerät bleibt kostengünstig, so dass nur eine niedrige Anfangsinvestition notwendig ist.

Die Lebensdauer des Displays beziehungsweise der Anzeigeeinrichtung beeinflusst nicht unmittelbar die Lebensdauer des gesamten Gerätes, da eine in ihrer Leistung stark nachlassende Anzeigeeinrichtung leicht ersetzt werden kann.

Defekte im Displaybereich können vom Kunden selbst behoben werden.

Weiter bietet das erfindungsgemäße Mobilfunkgerät die Individualisierung des eigenen Gerätes.

## Patentansprüche

1. Mobilfunkgerät mit einer Anzeigeeinrichtung
**dadurch gekennzeichnet dass**
die Anzeigeeinrichtung elektrisch und mechanisch lösbar mit dem Mobilfunkgerät gekoppelt ist.
